# EUROPÄISCHE PATENTSCHRIFT

(11) **EP 0 781 007 B1**
(45) Veröffentlichungstag und Bekanntmachung des Hinweises auf die Patenterteilung: **12.03.2003**
(21) Anmeldenummer: 95120259.7
(22) Anmeldetag: 21.12.1995
(51) Int. Cl.: H04L 12/56

(54) **Verfahren zum Bilden von Leitweginformation in einem ATM-Kommunikationsnetz**
Method for creating routing information in an ATM communications network
Procédé pour produire des informations de routage dans un réseau de communication ATM

(43) Veröffentlichungstag der Anmeldung: 25.06.1997
(73) Patentinhaber: SIEMENS AKTIENGESELLSCHAFT, 80333 München (DE)
(72) Erfinder: Hummel, Heinrich, Dipl.-Math., D-85232 Günding (DE)

(56) Entgegenhaltungen:
- COMPUTER NETWORKS AND ISDN SYSTEMS, Bd. 12, Nr. 1, August 1986, AMSTERDAM NL, Seiten 27-37, XP002003894 A.E. BARATZ: "Establishing virtual circuits in large computer networks"
- COMPUTER COMMUNICATION REVIEW, Bd. 25, Nr. 2, April 1995, USA, Seiten 82-92, XP000570739 W.C. LEE: "Topology aggregation for hierarchical routing in ATM networks"
- COMPUTER COMMUNICATION REVIEW, Bd. 7, Nr. 1, Januar 1977, USA, Seiten 29-33, XP002003895 C.A. SUNSHINE: "Source routing in computer networks"
- IEEE JOURNAL ON SELECTED AREAS IN COMMUNICATION, Bd. 7, Nr. 8, Oktober 1989, NEW YORK US, Seiten 1243-1252, XP000126342 V.R. SAKSENA: "Topological analysis of packet networks"

## Beschreibung

Erhält in einem ATM-Kommunikationsnetz, welches nach den Prinzipien des PNNI-Protokolls des ATM Forums (ATM Forum Technical Committee Private Network-Node-Interface (PNNI) Specification, Version 1.0)operiert, ein Ausgangsvermittlungsknoten S (S wie "source node") eine Verbindungsaufbaumeldung von einem an ihm angeschlossenen Endgerät, so muß in diesem für den gesamten Leitweg durch das Netz bis hin zum Zielvermittlungsknoten D (D wie "destination node"), an welchem das gewünschte Zielverbindungs-Endgerät angeschlossen ist oder an welchem ein Verbindungsübergang in ein anderes Netz vorgenommen werden soll, eine Leitweginformation ermittelt und diese in PNNI-Protokoll gemäßer Form der Verbindungsaufbaumeldung vor dem Weiterleiten zum nachfolgenden Vermittlungsknoten beigefügt werden.

Besagte ATM-Kommunikationsnetze können in zahlreiche Teilnetze ("Peer Groups"), bestehend aus physikalischen Vermittlungsknoten ("nodes") und physikalischen Verbindungsleitungen ("physical links") strukturiert sein. PNNI-Protokoll-gemäß bestimmen die Knoten einer (hierarchisch niedrigsten) Peer Group aus ihrer Mitte einen sogenannten Vertreterknoten ("Peer Group Leader"), der die gesamte Peer Group in Form eines einzigen, logischen, modellhaften Knotens ("logical group node" oder auch "parent node" genannt) in einer hierarchisch höheren Peer Group repräsentiert. Es bildet sich eine hierarchisch höhere Peer Group aus mehreren derartigen parent nodes, sowie den diese vernetzenden Verbindungsleitungen, wobei so eine Verbindungsleitung ("logical link") eine logisch gebildete Teilmenge all jener physikalischen Verbindungsleitungen repräsentiert, welche je zwei Grenzknoten der beiden benachbarten (hierarchisch niederen - "child" -) Peer Groups miteinander verbinden und per Administration mit einer identischen Kennzeichnung ("Aggregation Token" genannt) versehen wurden.

Rekursiv kann sich die Hierarchie in weiteren Hierarchieebenen fortsetzen: Auch in der hierarchisch höheren Peer Group kann abermals eine Peer Group Leader Wahl stattfinden. Der dabei gewählte Peer Group Leader repräsentiert erneut den gesamten unter ihm aufgebauten Hierarchiebereich in einer hierarchisch nächst höheren Peer Group als wäre dieser Hierarchiebereich ein einziger Knoten. In dieser Peer Group gibt es erneut logische, modellhafte Verbindungsleitungen zwischen je zwei Nachbarknoten, wobei eine solche Verbindungsleitung wiederum eine logisch gebildete Teilmenge all jener physikalischen Verbindungsleitungen repräsentiert, welche von je einem physikalischen Vermittlungsknoten in den benachbarten Hierarchiebereichen begrenzt werden.

Vervollständigt wird das PNNI-Protokoll-gemäße hierarchische modellhafte Netz (für die Anschauung: 3-dimensionales Gitter) durch die Hinzunahme von weiteren, rein logischen Verbindungsleitungen, den sogenannten "Uplinks", welche PNNI-Protokoll-gemäß je zwei Knoten (physikalisch - falls der Knoten am unteren Ende des Uplinks ein physikalischer Knoten ist - oder logisch) aus hierarchisch unterschiedlich hohen Peer Groups miteinander verbinden.

So führt vom Grenzknoten einer hierarchisch niedrigsten Peer Group, welcher über eine physikalische Verbindungsleitung mit einem Grenzknoten in einer benachbarten Peer Group verbunden ist, ein Uplink (des weiteren auch "initialer Uplink" genannt) zu einem Vertreterknoten, dem sogenannten "upnode", d.h. zu jenem Vertreterknoten "ancestor node" (d.h. parent node, bzw. "grandparent node", bzw. grand...grandparent node) des benachbarten Grenzknotens, welcher zu genau einem bestimmten ancestor node des diesseitigen Grenzknotens ein unmittelbarer Nachbarknoten in einer gemeinsamen hierarchisch höheren Peer Group ist. Ein derartiger (initialer) Uplink hat zur Folge, daß auch alle ancestor nodes (des diesseitigen Grenzknotens), welche jedoch je einer hierarchisch niedrigeren Peer Group angehören als besagte gemeinsame hierarchisch höhere Peer Group, je einen Uplink (des weiteren auch "induzierter Uplink" genannt) zu besagtem upnode dem Hierarchiebild beisteuern.

Die hierarchische Strukturierung, welche letztlich auf entsprechenden Konfigurierungsdaten der einzelnen Knoten beruht, kann dabei sehr flexibel gehandhabt werden. Insbesondere können die einzelnen Knoten einer grand...grandparent Peer Group unterschiedlich viele Subhierarchieebenen samt diesbezüglichen Peer Groups haben.

Der PNNI-Protokoll-gemäße Austausch von Datenpaketen, "Hello-Packets" sowie PNNI-Topologiestatus Datenpaketen ("Topology-State-Packets" - PTSPs) über sogenannte Leitwegkontrollkanäle ("Routing-Control-Channels") sorgt dafür, daß jeder physikalische Vermittlungsknoten einer hierarchisch niedrigsten Peer Group dasselbe Wissen bezüglich der Topologie dieser und aller in der Hierarchie darüber befindlichen hierarchisch höheren Peer Groups inklusive aller Uplinks, ferner dasselbe Wissen bezüglich der Belegungsauslastung aller darin enthaltenen Knoten und Verbindungsleitungen sowie dasselbe Wissen bezüglich deren Eigenschaften (Erreichbarkeit, Fähigkeiten, Merkmale, Kosten) erwirbt.

Das erworbene Topologiewissen läßt sich in Form eines Graphen G1 in einem Knoten abspeichern. In ihm sei der jeweils aktuelle Vermittlungsknoten (der, der diesen Graphen G1 für sich erstellt hat) als Ausgangsknoten S besonders markiert.

Äußert nun ein am Ausgangsknoten angeschlossenes Endgerät den Wunsch, mit dem Endgerät einer gewissen Zieladresse verbunden zu werden, so gestatten die per PNNI-Routing-Protokoll ausgetauschten Daten im Graphen G1 jenen Zielknoten D zu bestimmen, welcher die Erreichbarkeit des Zielendgeräts proklamiert und dabei der hierarchisch niedrigst möglichen Peer Group angehört.

Das ATM Forum Technical Committee Private Network-Node-Interface (PNNI) in der Spezification, Version 1.0, Anhang H sieht dabei jedoch nicht die Möglichkeit vor, auch vorteilhafte Umwege über ein oder mehrere Peer Groups mit Rückkehr zur bereits passierten Peer Group in die Leitwegsuche einzubeziehen, dadurch ist es mitunter nicht möglich eine Vermittlungsanforderung entsprechend zu erfüllen.

Die Aufgabe des erfindungsgemäßen Verfahrens besteht nun darin, unter Beachtung der vorhandenen Belegungsauslastungsinformation bezüglich aller Knoten und Verbindungsleitungen dieses Graphen G1 und unter Beachtung ihrer Eigenschaften, sowie der geäußerten Ansprüche des vorliegenden Verbindungswunsches einen bestmöglichen Verbindungsweg zu ermitteln und die ermittelte Information in eine Leitweginformation derart umzusetzen, daß diese den PNNI-Protokoll-Vorschriften genügt, und deshalb der Verbindungsaufbaumeldung auf dem Weg zum nächsten Verbindungsknoten mitgegeben werden kann. Die Aufgabe wird durch das Verfahen ausgehend von dem im Dokument "Topology Aggregation for Hierarchical Routing in ATM Networks" von Whay C. Lee XP570739 erläuterten Oberbegriff des Patentanspruchs 1 durch dessen kennzeichnende Merkmale gelöst.

Ein Graph G2 wird bestimmt, der aus dem Graphen G1 hervorgeht, indem all jene Knoten und Verbindungsleitungen aus dem Graphen G1 entfernt werden, welche den genannten Bedingungen nicht standhalten.

Anschließend wird ein optimaler Verbindungsweg derart bestimmt, daß Umwege über hierarchisch höhere Peer Groups mit anschließender Rückkehr zu bereits passierten hierarchisch niedrigeren Peer Groups mitberücksichtigt werden. Dabei sind die Austrittsknoten und Wiedereintrittsknoten bei ein und derselben Peer Group unterschiedlich, sonst würde solch ein Umweg ein höchst überflüssige Schleife und keinen optimalen Verbindungsweg darstellen.

Auch wenn sich alles Nachfolgende auf umwegartige Leitwege ("Routen") konzentriert, so darf nicht übersehen werden, daß das erfindungsgemäße Verfahren auch für den Normalfall, bei dem eine beste, umweglose Route zur Verfügung steht, diese auch findet und für sie ebenso korrekt die entsprechende Leitweginformation bildet.

Die sich ergebende optimale Route kann prinzipiell beliebig viele Übergänge von einer hierarchisch höheren zu einer hierarchisch niedrigeren Peer Group und umgekehrt von einer hierarchisch niedrigeren zu einer hierarchisch höheren Peer Group enthalten, wobei bei jedem einzelnen Übergang prinzipiell beliebig viele, d.h. null, eins, zwei,...oder n <=102 Hierarchieebenen übersprungen werden dürfen.

PNNI-Protokoll-gemäß wird der Verbindungsaufbaumeldung die Leitweginformation als Folge von Informationselementen, sogenannten "Designated-Transit-List-Informationselementen (DTLs)" mitgegeben, wobei ein vorausgehendes Informationselement (Repeat-Indicator) Informationselement auf die Kellerspeicher-(stack)-artige Handhabung dieser DTLs (Pushund Pop-Operationen) hinweist. Dabei enthält jedes Informationselement DTL die Beschreibung von genau einer Route durch genau eine hierarchische Peer Group in Form von einem oder mehreren Knoten-Link-Paar Angaben sowie einem Zeiger, der auf eines dieser Knoten-Link-Paare deutet. Die vom obersten Informationselement DTL des Kellerspeichers beschriebene Route beginnt dabei mit dem Ausgangsknoten S und enthält nur Angaben bezüglich Knoten und Verbindungsleitungen in der hierarchisch niedrigsten Peer Group und endet gegebenenfalls mit der Angabe eines Uplinks, der zu einem upnode führt, bei dem die Route sich fortsetzt, und zwar so, wie sie im nächst-tiefer gekellerten DTL beschrieben ist. Jedes nächst-tiefer im Kellerspeicher befindliche DTL enthält Angaben für je eine Route durch die hierarchisch nächst-höhere Peer Group, wobei sie mit der Angabe des diesbezüglichen ancestor nodes des Ausgangsknotens beginnen, eventuell gefolgt von weiteren Knoten- und Verbindungsleitungsangaben aus selbiger Peer Group und eventueller Uplink-Angabe als Abschluß. Das stacktiefste DTL enthält Angaben bezüglich einer Route durch die hierarchisch höchste benötigte Peer Group, beginnend mit der Angabe des diesbezüglichen ancestor nodes des Ausgangsknotens und endend bei einem Knoten, in dessen Hierarchiebereich sich der Zielknoten mit dem angeschlossenen Zielendgerät befindet.

Die beschriebene PNNI-Protokoll-gemäße Gestaltung des DTL-Kellerspeichers erweckt zunächst den Anschein, als könnten Leitwege, welche aus beliebigen Folgen von hierarchisch höheren und hierarchisch niedrigeren Knoten bestehen, nicht berücksichtigt werden, und daß es wohl angezeigt wäre, den Algorithmus für die Suche eines optimalen Verbindungsweges derart zu gestalten, daß Routen mit derartigen Folgen (sprich mit Umwegen über hierarchisch höhere Peer Groups) von vornherein ausscheiden, wie es in der Spezifikations des PNNI-Protokolls, Version 1.0, Anhang H der Fall ist.

Das erfindungsgemäße Verfahren löst jedoch das Darstellungsproblem einer derartigen umwegbehafteten Route und bildet auch für sie Leitweginformationen, die den PNNI-Protokollgemäßen Vorschriften genügen.

Charakteristisch an der erfindungsgemäßen Lösung ist es, daß aus einer vorgegebenen Folge von hierarchisch höheren und hierarchisch niedrigeren Knoten, in welcher Uplinks durchaus auch in Abwärtsrichtung zu passieren wären, eine äquivalente Folge von Knoten und Verbindungsleitungen abgeleitet wird, welche hinsichtlich der Hierachieebenen dieser Knoten niemals absteigend verläuft, bei der also Uplinks niemals in Abwärtsrichtung zu passieren sind. Als Tribut des dadurch Erreichten kann ein und derselbe hierarchisch höhere (logische) Knoten mehrfach in der Folge auftreten (Schleifen), jedoch wird aufgrund der angegebenen Verbindungsleitungen eindeutig dafür gesorgt, daß die Austritts- und Wiedereintrittsgrenzknoten in den diesbezüglichen Child Peer Groups stets verschieden sind, was letztlich bedeutet, daß ein und derselbe physikalische Knoten niemals öfter als einmal passiert wird.

Im folgenden wird die Bestimmung der besten Route in einem den Leitweg und die Leitweginformation bestimmenden Vermittlungsknoten erläutert:

Vom oben genannten Graphen G2 wird ein Graph G3 abgeleitet, indem sämtliche ancestor nodes des Ausgangsknotens S entfernt werden, ebenso sämtliche (horizontale) von diesen wegführende Verbindungsleitungen, welche von eben diesen ancestor nodes zu deren Nachbarknoten in den entsprechenden hierarchisch höheren Peer Groups führen würden, sowie sämtliche von diesen ancestor nodes in Aufwärtsrichtung wegführenden induzierten Uplinks.

Gemäß dem PNNI-Protokoll wird z.B. mit Hilfe des Dijkstra-Routing-Algorithmus eine beste Route vom Ausgangsknoten S hin zum Zielknoten D basierend auf dem Graphen G3 auf bekannte Weise ermittelt, wobei die im Graphen G3 verbliebenen Uplinks nicht anders als alle anderen (horizontalen) Verbindungsleitungen zu behandeln sind.

Als beste Route ergibt sich eine Folge F1 in allgemeiner Notation: node-n(=D), link-n-1,..,node-i+1, link-i,..,link-1, node-1(=S).

Es liegt in der Natur des Dijkstra-Routing-Algorithmus, daß nicht nur zu einem einzigen, bestimmten Zielknoten D, sondern zu allen Knoten des Netzes die jeweils beste Route ermittelt wird, von denen man sich im nachhinein die interessierende Route etwa zum Zielknoten D heraussucht. Durch den Dijkstra-Algorithmus wird dabei zunächst diese Route in der Form der Folge F1 bestimmt.

Anschließend dreht man die Reihenfolge um und bildet die Folge F2:
node-1(=S),link-1,..,link-i, node-i+1,.., link-n-1, node-n(=D).

Der physikalische Ausgangsknoten node-1=S ist naturgemäß von hierarchisch niedrigster Ebene. Alle anderen Knoten dürfen erfindungsgemäß der Reihe nach beliebig oft hierachisch höhere oder hierarchisch niedrigere physikalische oder logische Knoten sein. Insbesondere muß der Zielknoten node-n=D nicht unbedingt der hierarchisch höchste unter den in der Folge vorkommenden Knoten sein.

Ein Link link-i erweist sich als horizontal wenn node-i und node-i+1 der gleichen Hierarchieebene zugeordnet sind, sprich zur selben hierarchischen Peer Group gehören. Ein Link link-i erweist sich als Uplink in Aufwärtsrichtung (respektive Abwärtsrichtung) wenn die Hierarchieebene von Knoten node-i kleiner (respektive größer) als die Hierarchieebene von Knoten node-i+1 ist.

Aus der Folge F2 wird erfindungsgemäß eine Folge F3 abgeleitet, bei der die Knoten in der vorgegebenen Reihenfolge hinsichtlich ihrer Hierarchieebene niemals absteigen. Vermittlungsknoten nodes und Links von F2 werden dabei ggf. durch andere ersetzt oder gestrichen. Man verwende hierzu eine Hilfsvariable, hier genannt CurrentNodeLevel, welche man mit dem Hierarchielevel des Knotens node-1=S initialisiert, sowie eine zweite boolsche Hilfsvariable, hier genannt Below-HighestReachedLevel, welche man mit FALSE initialisiert. In einer Iterationsschleife durchläuft man, beginnend bei Ausgangsknoten node-1=S, sämtliche Komponenten der Folge F2 (die links und die nodes) und nimmt mitunter Ersetzungen oder Streichungen vor - siehe nachfolgender Algorithmus:

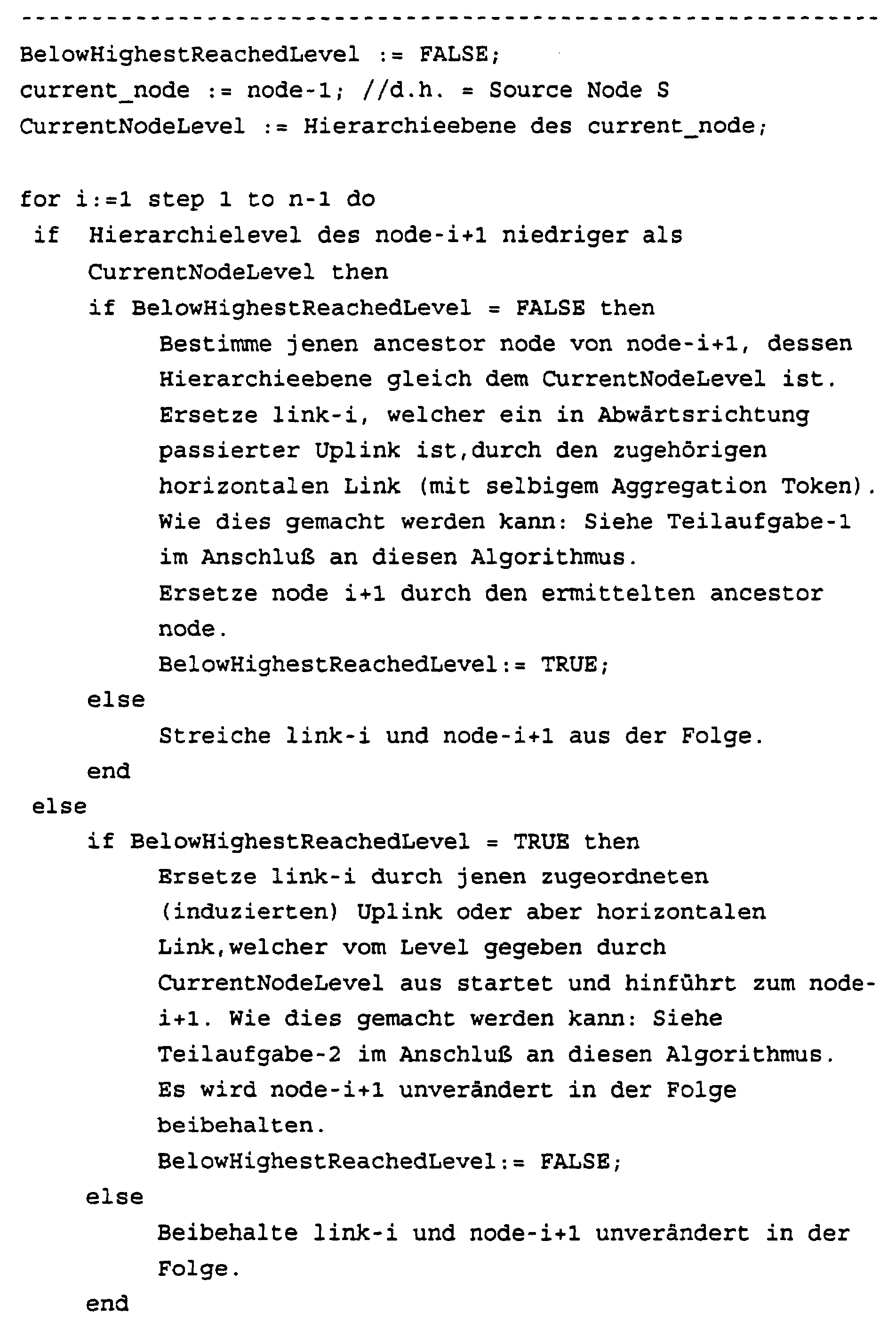

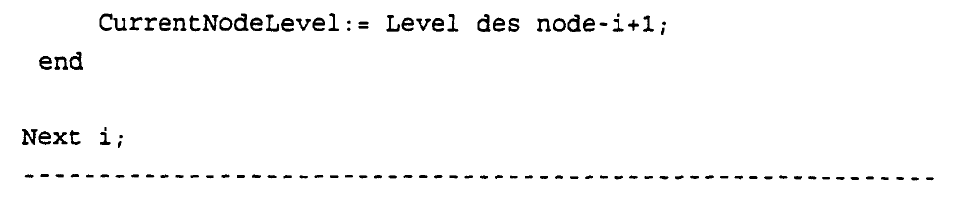

### Teilaufgabe-1:

Zu einem vorgegebenen Uplink ist der zugehörige horizontale Link in der hierarchisch höheren Peer Group zu bestimmen:

Der Graph G1 hat m Links (horizontale Links und Uplinks zusammengenommen). Die Zahl k aus der Menge 1,2,...,m stellt einen Zeiger auf die interessanten Informationen bezüglich genau eines Links dar (z.B. seine Identitätsangaben). Insbesondere existiere eine Tabelle RelationTbl mit m Elementen. Die Elemente repräsentieren die Zuordnungskette vom initialen Uplink zum eventuell induzierten Uplink, zum eventuell daraus erneut induzierten Uplink, usw., zum daraus induzierten horizontalen Link in einer hierarchisch höheren Peer Group: 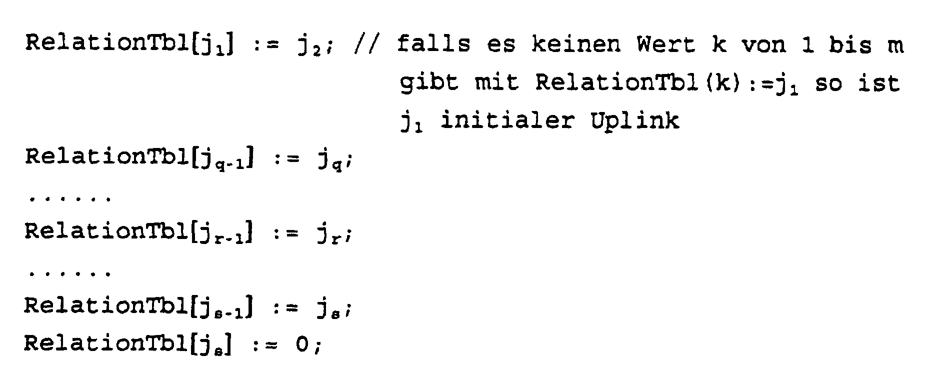 was bedeutet:

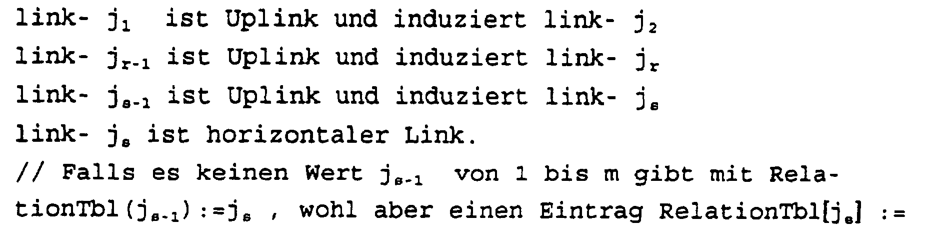

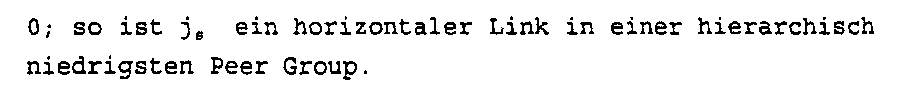

Angenommen der zu ersetzende link-i entspricht j_{q-1} , so wird die Tabelle RelationTbl durchlaufen, bis man auf RelationTbl[jₛ] := trifft. jₛ kennzeichnet den einzusetzenden horizontalen Link.

### Teilaufgabe-2:

Es gibt für alle m Links des Graphen G1 eine Tabelle der Art: LinkLevelTbl[k]=niedrigster Hierarchielevel der beiden Begrenzungsknoten des Links k; für alle k=1,..,m. link-i ist durch j_{q-1} bezeichnet. Es wird die Tabelle RelationTbl ab RelationTbl [ j_{q-1}] durchlaufen, um von einem Link zum nächsten Link zu kommen und es wird dabei stets CurrentNodeLevel mit den Eintragungen in LinkLevelTbl verglichen. Angenommen, der Wert von CurrentNodeLevel sei gleich dem Wert von Link-LevelTbl[jᵣ₋₁], so identifiziert jᵣ₋₁ den gesuchten Link, welcher link-i ersetzen soll.

Aus der Folge F3 bilde man eine Folge F4 z.B. wie folgt:

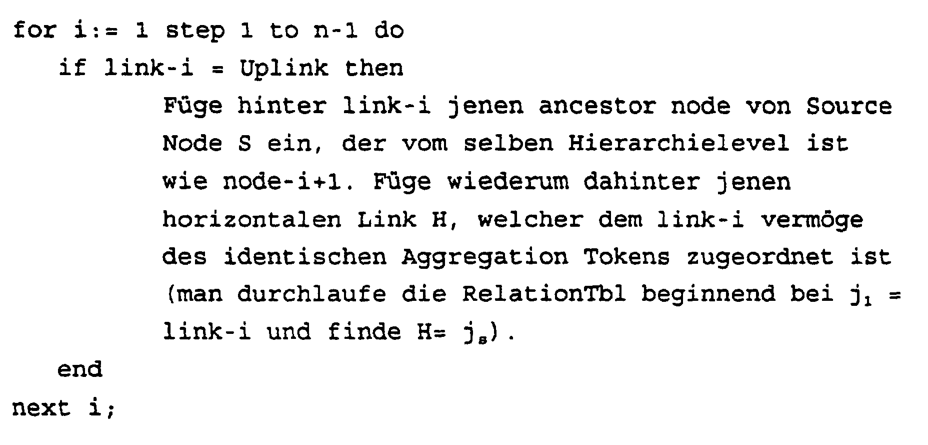

Aus F4 bilde man eine Sequenz von DTLs, indem man die Folge F3 hinter jedem Uplink zerstückelt und aus jeder so erzeugten Teilfolge ein DTL Informationselement von PNNI-Protokoll-gerechter Syntax bildet - womit die erfindungsgemäße Aufgabe für den Ausgangsknoten S vollkommen beschrieben ist.

Erfindungsgemäß kann die Einbeziehung einer Schleife (im Sinne des erfindungsgemäßen Verfahrens ein Umweg über ein oder mehrere Peer Groups mit Rückkehr zu einer bereits passierten Peer Group an einem noch nicht passierten Wiedereintrittsknoten) auch beim Wiederauffüllen der Informationselemente der Leitweginformation bei Ankunft der Verbindungsaufbaumeldung in einem zu passierenden physikalischen Vermittlungsknoten (Transitknoten) erfolgen. Dies wird im folgenden anhand des Eintreffens einer Verbindungsaufbaumeldung im ersten physikalischen Vermittlungsknoten einer hierarchisch niedrigsten Peer Group verdeutlicht:

Wenn beim Weiterleiten einer Verbindungsaufbaumeldung die momentane hierarchisch niedrigste Peer Group verlassen wird, so muß zuvor das diesbezügliche, stack-oberste DTL entfernt werden. Wird gar ein gewisser Hierarchiebereich verlassen, so müssen zuvor all jene stack-obersten Informationselemente DTL entfernt werden, welche Routenabschnitte durch die jeweiligen Peer Groups des zu verlassenden Hierarchiebereichs enthalten. Wenn beim Weiterleiten einer Verbindungsaufbaumeldung eine hierarchisch niedrigste Peer Group neu betreten wird, so müssen neue Routenabschnitte ermittelt und neue diesbezügliche DTLs gebildet werden. Die Zeiger in den einzelnen DTLs müssen stets so gesetzt bzw. vorgerückt werden, daß beim Empfang einer Verbindungsaufbaumeldung die Zeiger aller empfangenen DTLs je auf ein Knoten-Link-Paar deuten, welches entweder den empfangenden physikalische, hierarchisch niedrigste Knoten oder aber einen seiner ancestor nodes beinhaltet.

Der Grenzknoten (S'), als Eintrittsknoten in eine weitere Peer Group bestimmt einen neuen besten Routenabschnitt bis hin zu einem Zielknoten D'. Der Zielknoten D' ist dem Knoten-Link-Paar zu entnehmen, welches dem Knoten-Link-Paar im stack-obersten der empfangenen DTLs nachfolgt, auf welches der diesbezügliche Zeiger zeigt.

Falls dies nicht möglich ist, weil der Zeiger bereits auf das letzte Knoten-Link-Paar deutet, so gilt selbiges bezogen auf das nächst-tiefer im stack befindliche DTL, usw. Es ist im Sinne der Erfindung, daß das PNNI-Protokoll vorschreibt, daß auch der empfangenen Link-Angabe, nämlich wie man zum Knoten Knoten D' kommt, voll und ganz entsprochen werden muß. Jeder Versuch etwa, noch besser dorthin zu gelangen, könnte zwar einen besseren Routenabschnitt erbringen, zugleich aber auch dazu führen, daß der vom Zielknoten D' repräsentierte Hierarchiebereich nicht am vorgesehenen Grenzknoten betreten wird, von wo aus die Fortsetzung des Verbindungsaufbaus in einer Sackgasse enden könnte. D.h. es wird zusätzlich zu D' auch noch der horizontale Link Link-to-D' bestimmt. Man entnimmt Link-to-D' dem Knoten-Link-Paar, welches dem jenigen DTL angehört, in welchem sich D' befindet und auf welches der diesbezügliche Zeiger beim Empfang des DTLs zeigt.

Der Grenzknoten S', der beachtet, daß er für den vorliegenden Verbindungsaufbauwunsch nur ein Transitknoten ist und daß der empfangene DTL Kellerspeicher unvollständig ist, bildet daher von seinem eigenen Graphen G1 ausgehend einen eventuell reduzierten Graphen G1' wie folgt:

Vom Graphen G1 werden alle Knoten - samt angrenzender Links - mit einer Hierarchieebene größer oder gleich der Hierarchieebene des Knoten D' entfernt, nicht aber D' selbst und auch nicht jene Uplinks, für die D' Upnode ist und dabei dem Link-to-D' zugeordnet sind. D.h. für alle Uplinks, welche D' als Upnode haben, mache man folgende Prüfung:

Wie in Teilaufgabe-1 ist einem Uplink ein j_{q-1} zuordenbar. Man durchlaufe die Tabelle RelationTbl ausgehend von Relation-Tb1[j_{q-1}] bis man auf einen Eintrag RelationTbl[jₛ] := trifft. Falls jₛ dem Link-to-D' entspricht, so darf der Uplink im Graphen G1' verbleiben. Andernfalls wird er entfernt.

Von G1' ausgehend werden die Graphen G2' und G3' gebildet, ganz analog wie der Ausgangsknoten S die Graphen G2' und G3' gebildet hat, und wie oben beschrieben ein DTL-stack bestimmt wird, wobei S' die Funktion von S und D' die Funktion von D übernimmt (siehe obige Beschreibung).

Vom resultierenden DTL-Kellerspeicher werden sämtliche DTLs mit Ausnahme des allerletzten (welches D' enthält) übernommen und damit der weiterzuleitende DTL- Kellerspeicher vervollständigt.

Eine Einbeziehung von oben genannten Schleifen beim erfindungsgemäßen Verfahren erfordert, daß Verbindungsleitungen existieren, die mit unterschiedlichen Grenz-Vermittlungsknoten des ersten Teilnetzes bzw. unterschiedlichen Vertretern der Teilnetze höherer Hierarchieebene verbunden sind; erst damit ergeben sich alternative Leitwege.

Konnten wirtschaftlichere Alternativen zur schleifenlosen Leitwegen für eine Verbindung mit den gewünschten Eigenschaften ermittelt werden, werden Leitweginformationen, die Angaben über die überprüften Verbindungsleitungen enthalten, erzeugt. Beim erfindungsgemäßen Verfahren ist kein Wissen zur Netztopologie der weiteren Teilnetze (Peer Groups )- also außerhalb der des eigenen Zweiges der Hierarchie im Vermittlungsknoten, der die Leitwegbildung vornimmt, erforderlich. Wesentlich ist jedoch, daß zumindest zwei Verbindungsleitungen von unterschiedlichen Grenz-Vermittlungsknoten des ersten Teilnetz zu zumindest einem weiteren Teilnetz vorliegen.

Das erfindungsgemäße Verfahren kann im Ausgangs-Vermittlungsknoten realisiert werden, wenn der Ausgangs-Vermittlungsknoten und der Ziel-Vermittlungsknoten dem gleichen Teilnetz angehören und die Leitweginformationen mit einer oder mehreren Schleifen zu weitern Teilnetzen gebildet werden. Dabei kann durch den Ausgangs-Vermittlungsknoten für einen Verbindungsaufbau erstmalig die Bildung von Leitweginformationen für eine Verbindungsaufbaumeldung (setup) vorgenommen werden. A1-ternativ ist es möglich, daß der die Leitweginformation im Sinne des erfindungsgemäßen Verfahrens bildende Ausgangs-Vermittlungsknoten selbst ein Transit-Kommunikationssystem ist, so daß die Verbindungsaufbaumeldung (setup) empfangen wird und die darin enthaltene Leitweginformationen weiterverarbeitet und für den folgenden Leitweg zum Ziel-Vermittlungsknoten weitergebildet wird.

Gehören der Ausgangs-Vermittlungsknoten einem ersten Teilnetz und der Ziel-Vermittlungsknoten einem weiteren Teilnetz an, können ebenfalls erkennbare Engpässe vermieden werden, indem Schleifen in den Leitweg einbezogen werden.

Es ist möglich, Verbindungsleitungen zwischen Teilnetzen vorgebbarer höherer Ordnung nicht in die Leitwegsuche durch Nutzung eines gemeinsamen Zuordnungszeichens für mehrere Verbindungsleitungen einzubeziehen. Dies bedeutet, daß die Einbeziehung weiterer Teilnetze in die Leitwegsuche auf bestimmte Bereiche der Hierarchie des ATM-Kommunikationsnetzes beschränkt wird. Geht man davon aus, daß Teilnetze anhand von geographischen Kriterien strukturiert werden, werden damit Leitwegsuchen über geographisch weit entfernten Teilnetze unterbunden, wodurch eine Obergrenze für den Ressourcen- und damit den wirtschaftlichen Aufwand für einen Verbindungsaufbau vorgegeben werden kann.

Gemäß einer weiteren vorteilhaften Ausgestaltung des erfindungsgemäßen Verfahrens kann die Einbeziehung von weiteren Teilnetzen derart erfolgen, daß ein Teilnetz mehrmals verlassen wird oder auch Schleifen bei weiteren Teilnetzen zugelassen werden, ohne die ein Zustandekommen der Verbindung nicht mit den gleichen Bedingungen möglich wäre. Durch diese Ausweitung der Prüfung auf das Vorhandensein von Verbindungsleitungen können auch Verbindungen realisiert werden, bei denen die Leitwegressourcen und Vermittlungskapazitäten des ersten Teilnetzes stark eingeschränkt sind.

Weitere vorteilhafte Ausbildungen des erfindungsgemäßen Verfahrens sind den übrigen untergeordneten Ansprüchen zu entnehmen.

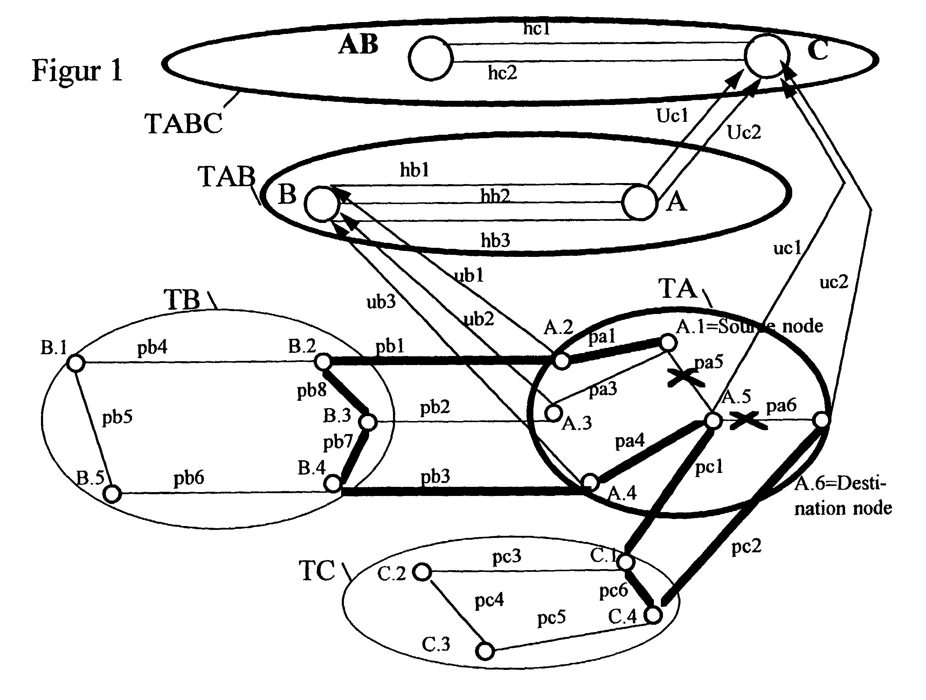

Anhand der Figuren 1 bis 3 wird beispielhaft die Bildung der Leitweginformation in Vermittlungsknoten eines ATM-Kommunikationsnetzes näher erläutert. Dabei zeigen die Figuren 1 bis 3 ein und dasselbe ATM-Kommunikationsnetz für eine Leitwegsuche und Bildung von Leitweginformation, jedoch von unterschiedlichen Vermittlungsknoten aus gesehen.
- Figur 1: zeigt das ATM-Kommunikationsnetz aus der Sicht des Ausgangsvermittlungsknotens A.1,
- Figur 2: zeigt das ATM-Kommunikationsnetz aus der Sicht des Transitvermittlungsknotens B.2 und
- Figur 3: zeigt das ATM-Kommunikationsnetz aus der Sicht des weiteren Transit-Vermittlungsknotens C.1.

Das Hierarchiebild des ATM-Kommunikationsnetzes zeigt beispielhaft drei Teilnetze TA,TB,TC. Das erste Teilnetz TA umfaßt die physikalischen Knoten A.1..6. Für den zu betrachtenden Verbindungsaufbau ist der Knoten A.1 der Ausgangsvermittlungsknoten und der Knoten A.6 der Zielvermittlungsknoten. Diese Ausgangs- und Zielknoten müssen sich jedoch nicht in der gleichen Peer Group (Teilnetz) befinden, auch kann die Inanspruchnahme von Umwegen erst durch einen Transitknoten erfolgen. Ein weiteres Teilnetz TB umfaßt die Knoten B.1..5 und ein zusätzliches weiteres Teilnetz TC die Knoten C.1..4. Die Teilnetze TA, TB (peer groups der niedrigsten Hierarchieebene) sind auf einer höheren Hierarchieebene zu einer Netzgruppe TAB (peer group höherer Hierarchieebene) zusammengefaßt und werden jeweils durch eine logischen Knoten A, B repräsentiert. Auf einer wiederum höheren Hierarchieebene ist diese Netzgruppe TAB (peer group) mit dem weiteren zusätzlichen Teilnetz TC zu einer Netzgruppe TABC zusammengefaßt, wobei ein logischer Knoten AB die Netzgruppe höherer Hierarchieebne TAB und ein logischer Knoten C, das weitere zusätzliche Teilnetz TC repräsentieren.

Die Knoten sind untereinander durch physikalische Verbindungsleitungen (physikal links) verbunden. Links pb1,2,3 und pc1,2 zwischen Knoten verschiedener Teilnetze sind zusätzliche Informationen zugeordnet.

### Legende:

- Anfangsbuchstabe: p= physical link,
h=horizontal link,
u= initialer Uplink,
U=induzierter Uplink
pb1,hb1, und ub1, bzw. pb2,hb2, und ub2 bzw. pb3,hb3, und ub3 bzw.pc1, uc1, Uc1 und hc1 bzw. pc2, uc2, Uc2 und hc2 sind beispielhaft mit einem jeweils identischen Aggregation Token gekennzeichnet.

Die Knoten, in denen nach den Figuren 1 bis 3 die Leitweginformation gebildet wird, sehen nur jeweils die dick umrandeten Peer Groups (die im jeweiligen Knoten gespeicherte Wissensbasis umfaßt Angaben über diese Peer Groups). Statt der physikalischen Verbindungsleitungen, welche aus der hierarchisch niedrigsten Peer Group herausführen, sehen sie die diesbezüglich zugeordneten Uplinks. Nur die jeweiligen Grenzknoten selbst wissen um diese Zuordnung, teilen dieses Wissen aber nicht den übrigen Knoten der Peer Group mit.

Gesucht ist eine Route vom Ausgangsknoten A.1 zum Zielknoten A.6. Blockiert sind die Verbindungsleitungen pa5, pa6, die eine direkte Route vom Ausgangsknoten A.1 zum Zielknoten A.6 zulassen würden. Dick eingezeichnet ist der physikalische Weg, den der Verbindungsaufbau nehmen sollte.

### Tätigkeit des Ausgangsknotens A.1:

Im Ausgangsknoten A.1 sei der Graph G1, in Form einer Liste von Links samt deren Begrenzungsknoten gespeichert, d.h. G1(A.1) - siehe Figur 1:
(pa2 : A.2 , A.1), (pa3 : A.3 , A.1), (pa4 : A.4 , A.5), (pa5 : A.5 , A.1), (pa6 : A.6 , A.5),
(ub1: A.2 , B), (ub2: A.3 , B), (ub3: A.4 , B),
(uc1 : A.5, C), (uc2 : A.6 , C).
(hb1 : B , A), (hb2 : B , A), (hb3 : B , A),
(Uc1 : A, C), (Uc2 : A , C),
(hc1 C , AB), (hc2 : C , AB),

Es werden die blockierten Leitungen entfernt, und zwar (pa5 :
A.5 , A.1), (pa6 : A.6 , A.5), und
es wird der Graph G2(A.1) bestimmt:
(pa2 : A.2 , A.1), (pa3 : A.3 , A.1), (pa4 : A.4 , A.5), (ub1: A.2 , B), (ub2: A.3 , B), (ub3: A.4 , B),
(uc1 : A.5, C), (uc2 : A.6 , C).
(hb1 : B , A), (hb2 : B , A), (hb3 : B , A),
(Uc1 : A, C), (Uc2 : A , C),
(hc1 : C , AB), (hc2 : C , AB),

Alle ancestor nodes samt angrenzenden Leitungen werden entfert, nämlich
(hb1 : B , A), (hb2 : B , A), (hb3 : B , A),
(Uc1 : A, C), (Uc2 : A , C),
(hc1 : C , AB), (hc2 : C , AB),
und damit Graph G3(A.1) bestimmt:
(pa2 : A.2 , A.1), (pa3 : A.3 , A.1), (pa4 : A.4 , A.5), (ub1: A.2 , B), (ub2: A.3 , B), (ub3: A.4 , B),
(uc1 : A.5, C), (uc2 : A.6 , C).

Die Anwendung des Dijkstra-Routing-Algorithmus erbringt die Folge F1:
Destination Node D = A.6, uc2,C, uc1,A.5, pa4, A.4, ub3, B, ub1, A.2, pa2, A.1=Source Node S.

Die umgekehrte Reihenfolge = F2 lautet: Source Node S=A.1, pa2,A.2, ub1, B, ub3, A.4, pa4, A.5, uc1, C,uc2, A.6 = Destination Node D.

Die Folge F3 wird bestimmt:
A.1, pa2, A.2, ub1, B, hb3,A, Uc1, C, hc2, AB.

Die Folge F4 wird bestimmt:
A.1, pa2, A.2, ub1, A, hb1, B,hb3,A, Uc1,AB, hc1, C, hc2, AB.

Daraus werden die Informationselement des DTL-Kellerspeichers abgeleitet. Die Folge F4 wird nach jedem Uplink zerteilt und man bildet aus jeder der entstandenen Teilfolge ein Informationselement DTL, wie sie zum nächsten physikalischen Knoten gesendet werden. Der Zeiger zeigt auf das x-te geklammerte Knoten-Link-Paar.
1.DTL: (A.1, pa2), (A.2, ub1), Zeiger=2
2.DTL: (A, hb1), (B, hb3), (A, Uc1), Zeiger=1
3.DTL: (AB, hc1), (C, hc2), (AB,x'00 00 00 00), Zeiger=1

### Tätigkeit des Transit-Knotens B.2 (Eintrittsknoten im weiteren Teilnetz TB):

Der Transit-Knoten B.2 empfängt folgende Leitweginformation ri:
1. DTL: (A, hb1), (B, hb3), (A, Uc1), Zeiger=2
2. DTL: (AB, hc1), (C, hc2), (AB,x'00 00 00 00), Zeiger=1

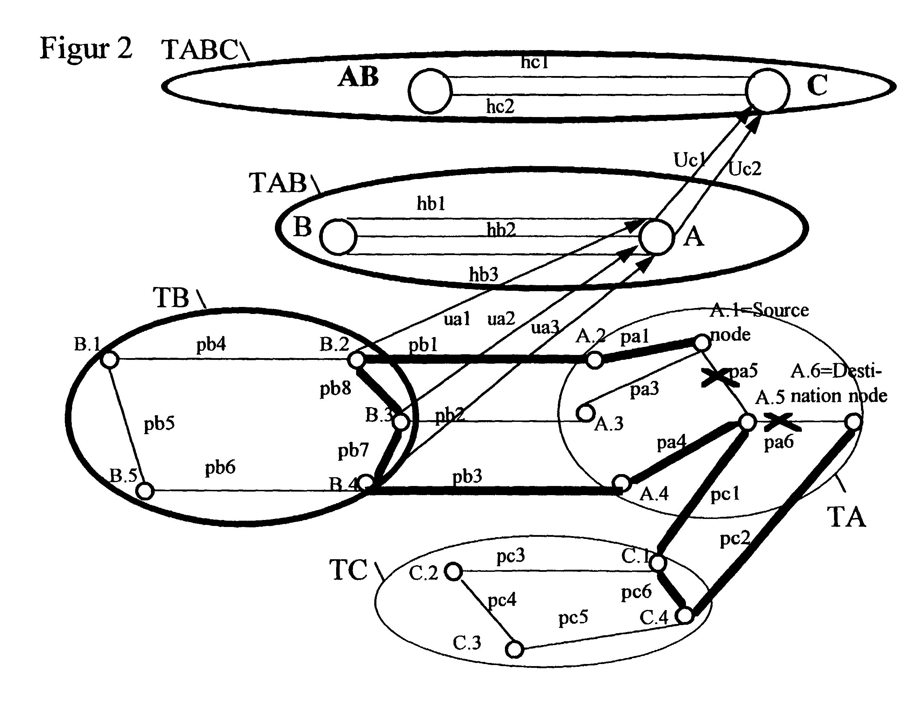

Knoten B.2 hat das von ihm sichtbare Netz als Graph G1(B.2) gespeichert - siehe Figur 2 dick umrahmt:
(pb4: B.1,B.2), (pb5: B.1,B.5), (pb6: B.4,B.5), (pb7 :
B.3,B.4), (pb8: B.2,B.3),
(ua1: B.2, A), (ua2: B.3, A), (ua3: B.4, A),
(hb1 : B , A), (hb2 : B , A), (hb3 : B , A),
(Uc1 : A, C), (Uc2 : A , C),
(hc1 : C , AB), (hc2 : C , AB).

Weil es sich um einen Transit-Verkehr handelt, wird G1'(B.2) gebildet, indem
zunächst D'(B.2) und Link-to-D'(B.2) bestimmt wird:
D' (B.2) = A
Link-to-D'(B.2) = hb3.

Im Transit-Knoten werden vom Graphen G1(B.2) alle Knoten vom Hierarchielevel größer-gleich des logischen Knotens A, sowie die diesbezüglich angrenzenden Links entfernt, ausgenommen jedoch D'(B.2) = A selbst und ausgenommen jene Uplinks für die A Upnode ist und mit Link-to-D'(B.2)=hb3 korreliert sind. Es entsteht der Graph G1'(B.2):
(pb4: B.1,B.2), (pb5: B.1,B.5), (pb6: B.4,B.5), (pb7:
B.3,B.4), (pb8: B.2,B.3),
(ua3: B.4, A)

Da keine Blockierungen dem Transitknoten B.1 bekannt sind, gilt Graph G1'(B.2) Graph G2'(B.2)
Da keine ancestor nodes des B.1 weiter davon entfernt werden können, gilt G1'(B.2) = G2' (B.2) = G3'(B.2).

Der angewendet Dijkstra-Routing-Algorithmus ergibt eine Folge F1:
D'(B.2) =A, ua3, B.4, pb7, B.3, pb8, B.2=S'(B.2)

Daraus ergibt sich in umgekehrter Reihenfolge F2:
S'(B.2) =B.2, pb8, B.3, pb7, B.4, ua3, A=D'(B.2)

Die Operation zur Bildung von F3 ergeben keine Veränderungen, d.h. Folge F2 = Folge F3.
Aus Folge F3 wird Folge F4 gebildet:
S'(B.2) =B.2, pb8, B.3, pb7, B.4, ua3, B, hb3, A=D'(B.2)

Aus Folge F4 werden die Informationselemente DTLs der Leitweginformation ri gebildet:
1. DTL: (B.2, pb8), (B.3, pb7), (B.4, ua3), Zeiger=2
2. DTL: (B, hb3), A=D'(B.2), Zeiger=1
von denen man das letzte (=2.) DTL nicht übernimmt.

Vom Eintrittsknoten B.2 zum weiteren Knoten B.3 im weiteren Teilnetz TB wird somit folgende Leitweginformation ri im DTL-Kellerspeicher-Format geschickt:
1. DTL, neu gebildet:
   (B.2, pb8), (B.3, pb7), (B.4, ua3), Zeiger=2
2. DTL, empfangen und weiterverarbeitet:
   (A, hb1), (B, hb3), (A , , Uc1), Zeiger=2
3. DTL, empfangen und weiterverarbeitet:
   (AB, hc1), (C, hc2), (AB,x'00 00 00 00), Zeiger=1

Tätigkeit des Transit-Knotens A.4 im ersten Teilnetz TA: Der Knoten A.4 empfängt folgende Leitweginformation ri:
1. DTL: (A, hb1), (B, hb3), (A, Uc1), Zeiger=3
2. DTL: (AB, hc1), (C, hc2), (AB,x'00 00 00 00), Zeiger=1

Knoten A.4 hat das von ihm sichtbare Netz als Graph G1(A.4) gespeichert, welcher mit dem vom Ausgangsknoten A.1 gespeicherten Graphen G1(A.1) übereinstimmt, siehe oben und siehe Figur 1 (dick umrandet).

Weil es sich um einen Transit-Verkehr handelt wird G1'(A.4) gebildet, indem
zunächst D'(A.4) und Link-to-D'(A.4) bestimmt wird:
D' (A.4) = C
Link-to-D' (A.4) = hc1.
Vom Graphen G1(A.4) werden alle Knoten vom Hierarchielevel größer-gleich dem Hierarchielevel von D'(A.4) = C, sowie die diesbezüglich angrenzenden Links entfert, jedoch ausgenommen D'(A.4) = C selbst und ausgenommen jene Uplinks für die D'(A.4) C Upnode ist und mit Link-to-D'(A.4)=hc1 korreliert sind.

Es entsteht Graph G1'(A.4):
(pa2 : A.2 , A.1), (pa3 : A.3 , A.1), (pa4 : A.4 , A.5), (pa5 : A.5 , A.1), (pa6 : A.6 , A.5),
(ub1: A.2 , B), (ub2: A.3 , B), (ub3: A.4 , B),
(uc1 : A.5, C),
(hb1 : B , A), (hb2 : B , A), (hb3 : B , A),
(Uc1 : A, C)

Die blockierten Links werden entfernt und es ergibt sich daraus Graph G2'(A.4) :
(pa2 : A.2 , A.1), (pa3 : A.3 , A.1), (pa4 : A.4 , A.5),
(ub1: A.2 , B), (ub2: A.3 , B), (ub3: A.4 , B),
(uc1 A.5, C),
(hb1 : B , A), (hb2 : B , A), (hb3 : B , A),
(Uc1 : A, C)

Sind davon alle noch enthaltenen ancestor nodes samt den daran angrenzenden Verbindungsleitungen entfernt, so ergibt sich Graph G3'(A.4):
(pa2 : A.2 , A.1), (pa3 : A.3 , A.1), (pa4 : A.4 , A.5),
(ub1: A.2 , B), (ub2: A.3 , B), (ub3: A.4 , B),
(uc1 : A.5, C) .

Per Dijkstra-Routing-Algorithmus wird darin als beste Route vom Transitknoten A.4 zum Vertreter C des zusätzlichen weiteren Teilnetzes TC die folgende Folge F1 ermittelt:
D'(A.4)=C, uc1, A.5, pa4, A.4= S'(A.4)
Durch Umkehrung der Reihenfolge ergibt sich die Folge F2:
S'(A.4)= A.4, pa4, A.5, uc1, C=D'(A.4)

Da die Folge F2 hinsichtlich Hierarchieebene der auftretenden Knoten niemals absteigend ist, so ergeben die Operationen zur Bildung der Folge F3 keine Änderungen: F3= F2.

Aus der Folge F3 wird die Folge F4 gewonnen, nämlich:
S'(A.4)= A.4, pa4, A.5, uc1,AB, hc1, C=D'(A.4)

Aus der Folge F4 die folgenden Informationselement DTLs der Leitweginformation ri abgeleitet:
1. DTL: (A.4, pa4), (A.5, uc1), Zeiger=2
2. DTL: (AB, hc1), (C, x'00 00 00 00), Zeiger=1
von denen man das letzte (=2.) DTL nicht übernimmt.

Vom Transitknoten A.4 zum Knoten A.5 wird somit folgender DTL-Kellerspeicherinhalt übermittelt:
1. DTL, neu gebildet: (A.4, pa4), (A.5, uc1), Zeiger=2
2. DTL, empfangen und weiterverarbeitet: (A, hb1), (B, hb3), (A, Uc1), Zeiger=3
3. DTL, empfangen und weiterverarbeitet: (AB, hc1), (C, hc2), (AB,x'00 00 00 00), Zeiger=1

Tätigkeit des Transit-Knotens C.1 im zusätzlichen weiteren Teilnetz TC: Der Knoten C.1 empfängt folgende Leitweginformation ri:
1.DTL: (AB, hc1), (C, hc2), (AB,x'00 00 00 00), Zeiger=2.

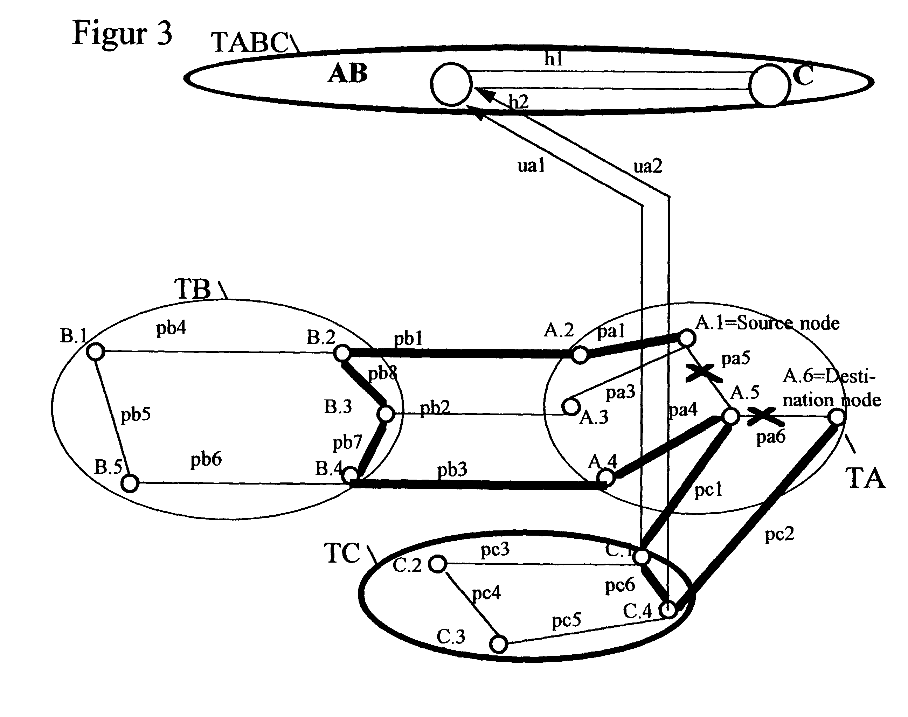

Der Knoten C.1 hat das von ihm sichtbare Netz als Graph G1(C.1) gespeichert, siehe Figur 3:
(pc3: C.1, C.2), (pc4: C.2, C.3), (pc5: C.3, C.4), (pc6: C.1, C.4),
(uab1: C.1, AB), (uab2: C.4, AB)
(hc1: C, AB), (Hc2: C, AB)

Weil es sich um einen Transit-Verkehr handelt wird G1'(C.1) gebildet, indem zunächst D'(C.1) und Link-to-D'(C.1) bestimmt wird:
D'(C.1) = AB
Link-to-D'(C.1) = hc2.
Von Graph G1(C.1) werden alle Knoten von einer Hierarchieebene größer-gleich der Hierarchieebene von D'(C.1) AB, sowie die diesbezüglich angrenzenden Links entfernt, jedoch ausgenommen D'(C.1) = C selbst und ausgenommen jene Uplinks für die D'(C.1) = AB Upnode ist und mit Link-to-D'(C.1)=hc2 korreliert sind.
Es ergibt sich der Graph G1'(C.1):
(pc3: C.1, C.2), (pc4: C.2, C.3), (pc5: C.3, C.4), (pc6: C.1, C.4),
(uab2: C.4, AB)

Da der Knoten C.1 keine blockierten Verbindungsleitungen vorfindet (diese befinden sich im ersten Teilnetz TA), ist
G1' (C.1) = G2' (C.1).
Weil sich davon keine ancestor nodes bezüglich Knoten C.1 zusätzlich entfernen lassen ist:
G1' (C.1) = G2' (C.1) = G3' (C.1)

Mit Hilfe des Dijkstra-Routing-Algorithmus wird de Knoten C.1 als beste Route die Folge F1 ermitteln:
D'(C.1)=AB, uab2, C.4, pc6, C.1=S'(C.1)

Durch Umkehrung der Reihenfolge ergibt sich Folge F2:
S'(C.1), pc6, C.4, uab2, AB=D'(C.1)

Da die Folge F2 hinsichtlich der Hierarchieebene der auftretenden Knoten niemals absteigend ist, so ergeben die Operationen zur Bildung der Folge F3 keine Änderungen:
F3 = F2.

Aus der Folge F3 wird die Folge F4 gewonnen, nämlich:
S'(C.1)=C.1, pc6, C.4, uab2,C,hc2, AB=D'(C.1)

Aus der Folge F4 werden die folgenden Informationselemente DTL der Leitweginformation ri abgeleitet:
1. DTL: (C.1, pc6), (C.4, uab2), Zeiger=2
2. DTL: (C,hc2), (AB,x'00 00 00 00), Zeiger=1
von denen man das letzte (=2.)DTL nicht übernimmt.

Vom Knoten C.1 zum weiteren Knoten C.4 im zusätzlichen weiteren Teilnetz TC wird somit folgender DTL-stack übermittelt:
1. DTL, neu gebildet: (C.1, pc6), (C.4, uab2), Zeiger=2
2. DTL, empfangen und weiterverarbeitet: (AB, hc1), (C, hc2), (AB,x'00 00 00 00), Zeiger=2.

Tätigkeit des Wiedereintritts-Knotens A.6 für den zweiten Wiedereintritt ins erste Teilnetz TA:
Der Knoten A.6 empfängt folgende Leitweginformation ri:
1. DTL: (AB, hc1) (C, hc2), (AB,x'00 00 00 00), Zeiger=3.

Insofern Knoten A.6 erkennt, daß das Ziel-Endgerät an ihm unmittelbar angeschlossen ist, sendet er die Verbindungsaufbaumeldung (setup) entlang der diesbezüglichen UNI-Schnittstelle (nicht mehr PNNI-Schnittstelle) zu diesem, wobei, UNI-Protokoll-gemäß, keine Informationselemente DTLs mitgegeben werden. Der Leitweg ist abgeschlossen.

## Patentansprüche

1. Verfahren zum Bilden von Leitweginformationen in einem aus Vermittlungsknoten (A.1..6, B.1..5, C.1..4) bestehenden ATM-Kommunikationsnetz für eine Verbindungsaufbaumeldung von einem Anfangs-Vermittlungsknoten (A.1) zu einem Ziel-Vermittlungsknoten (A.6),
- wobei die Vermittlungsknoten (A.1..6, B.1..5, C.1..4) jeweils Teilnetzen (TA,TB,TC) zugeordnet sind und untereinander über Verbindungsleitungen (pa1..6,pb1..8,pc1..6) vernetzt sind und eindeutig gemäß einer aufsteigenden hierarchischen Ordnung zu Teilnetzen (TAB) höherer Ordnung zusammengefaßt sind, welche weiter in Teilnetze (TABC) nächst höherer Ordnung zusammengefaßt sind, und
bei dem alle Topologieinformationen über Verbindungsleitungen innerhalb des vom die Leitweginformationsbildung vornehmenden Vermittlungsknoten (A.1, B.2, B.4, A.4, A.5, C.1, C.4) ausgehenden Zweiges der Kommunikationsnetzwerkhierarchie für die Leitweginformationsbildung in bezüglich der Kommunikationsnetzwerkhierarchie aufsteigender Richtung berücksichtigt werden,
**dadurch gekennzeichnet,**
**daß** auch vorteilhafte Leitwegschleifen über ein oder mehrere Teilnetze (TB, TC, TAB, TABC) jeglicher Hierarchieebene mit unterschiedlichen Austritts- und Wiedereintrittsvermittlungsknoten (A.2,A.4; A.5,A.6) derart berücksichtigt werden,
**daß** vom Leitweginformation bildenden Vermittlungsknoten (A.1, A.5) auch Verbindungsleitungen (pb3, pc2) in bezüglich der Kommunikationsnetzwerkhierarchie absteigender Richtung einbezogen werden.

2. Verfahren nach Anspruch 1,
**dadurch gekennzeichnet, daß** die Vermittlungsknoten (A.1..6, B.1..5, C.1..4) entsprechend den Prinzipien des Privaten Netzwerk-Knoten Protokolls (PNNI-Protokolls) operieren.

3. Verfahren nach Anspruch 1 oder 2,
**dadurch gekennzeichnet,**
**daß** die Leitweginformationsbildung im Ausgangs-Vermittlungsknoten (A.1) die Leitwegschleifen für eine Verbindungsaufbaumeldung einbezieht.

4. Verfahren nach Anspruch 1 oder 2,
**dadurch gekennzeichnet,**
**daß** die Leitweginformationsbildung in einem Transit-Vermittlungsknoten (A.5) die Leitwegschleifen für eine Verbindungsaufbaumeldung einbezieht.

5. Verfahren nach einem der Ansprüche 1 bis 4, bei dem der Ausgangs-Vermittlungsknoten (A.1) und der Ziel-Vermittlungsknoten (A.6) dem gleichen Teilnetz (TA) angehören und die Leitweginformationen unter Einbeziehung einer oder mehreren Schleifen zu weiteren Teilnetzen (TB, TC) gebildet werden.

6. Verfahren nach einem der Ansprüche 1 bis 4, bei dem der Ausgangs-Vermittlungsknoten (A.1) und der Ziel-Vermittlungsknoten (A.6) nicht dem gleichen Teilnetz angehören und die Leitweginformationen unter Einbeziehung einer oder mehreren Schleifen zu Teilnetzen jeglicher Hierarchieebene im Laufe des Fortschreitens des Verbindungsaufbaus gebildet werden.

7. Verfahren nach einem der Ansprüche 1 bis 6,
**dadurch gekennzeichnet,**
**daß** Verbindungsleitungen (pc1, pc2) zwischen Teilnetzen (TA,TC) ab einer vorgebbaren Hierarchieebene nicht für die Bildung der schleifenbehafteten Leitweginformation berücksichtigt werden, indem ein gemeinsames Zuordnungszeichen für mehrere Verbindungsleitungen bestimmt wird.

8. Verfahren nach einen der Ansprüche 2 bis 7,
**dadurch gekennzeichnet,**
**daß** durch den Ursprungs-ATM-Vermittlungsknoten (VK1) die Leitweginformationen in Informationselemente (DTL1..3) strukturiert wird, wobei für das erste Teilnetz (TA) und je in den Leitweg einbezogener Ordnung von Teilnetzen (TAB,TABC) ein Informationselement (DTL1..3) gebildet wird.

## Claims

1. Method for forming routing information in an ATM communication network, comprising switching nodes (A.1..6, B.1..5, C.1..4), for a connection set-up message from a source switching node (A.1) to a destination switching node (A.6),
- the switching nodes (A.1..6, B.1..5, C.1..4) being assigned in each case to subnetworks (TA, TB, TC) and being networked to one another via connecting lines (pa1..6,pb1..8,pc1..6) and being unambiguously combined according to an ascending hierarchical order to form subnetworks (TAB) of a higher order, which subnetworks are further combined into subnetworks (TABC) of the next higher order, and
in which method all the topology information is taken into account via connecting lines within that branch of the communication network hierarchy which starts from the switching node (A.1, B.2, B.4, A.4, A.5, C.1, C.4), which performs the formation of routing information, for the formation of routing information in the ascending direction with respect to the communication network hierarchy, **characterized**
**in that** even advantageous routing loops are taken into account via one or more subnetworks (TB, TC, TAB, TABC) of any hierarchy level with different exit and re-entry switching nodes (A.2,A.4; A.5,A.6) in such a way that connecting lines (pb3, pc2) in the descending direction with respect to the communication network hierarchy are also included by the switching node (A.1, A.5) which forms routing information.

2. Method according to Claim 1, **characterized in that** the switching nodes (A.1..6, B.1..5, C.1..4) operate in accordance with the principles of the private network node protocol (PNNI protocol).

3. Method according to Claim 1 or 2, **characterized in that** the formation of routing information in the source switching node (A.1) includes the routing loops for a connection set-up message.

4. Method according to Claim 1 or 2, **characterized in that** the formation of routing information in a transit switching node (A.5) includes the routing loops for a connection set-up message.

5. Method according to one of Claims 1 to 4, in which the source switching node (A.1) and the destination switching node (A.6) belong to the same subnetwork (TA) and the routing information is formed including one or more loops to form further subnetworks (TB, TC).

6. Method according to one of Claims 1 to 4, in which the source switching node (A.1) and the destination switching node (A.6) do not belong to the same subnetwork and the routing information is formed including one or more loops to form subnetworks of any hierarchy level during the course of the progression of the connection set-up.

7. Method according to one of Claims 1 to 6, **characterized in that** connecting lines (pc1, pc2) between subnetworks (TA,TC) starting from a prescribable hierarchy level are not taken into account for the formation of the routing information which is subject to loops, **in that** a common assignment character is determined for a plurality of connecting lines.

8. Method according to one of Claims 2 to 7, **characterized in that** the routing information is structured into information elements (DTL1..3) by the starting ATM switching node (VK1), one information element (DTL1..3) being formed for the first subnetwork (TA) and for each order of subnetworks (TAB,TABC) included in the route.

## Revendications

1. Procédé destiné à la production d'informations de routage, dans un réseau de communication ATM (ou MTA) composé de nodaux de commutation (A.1..6, B.1..5, C.1..4), pour un message d'établissement d'une liaison entre un nodal de commutation d'origine (A.1) et un nodal de commutation de destination (A.6),
- les nodaux de commutation (A.1..6, B.1..5, C.1..4) étant affectés chacun à des réseaux partiels (TA, TB, TC) et étant connectés en réseau les uns avec les autres par l'intermédiaire de circuits de liaison (pa1..6, pb1..8, pc1..6) et assemblés, d'une façon univoque selon un ordre hiérarchique ascendant, pour former des réseaux partiels (TAB) d'ordre supérieur, qui sont eux-mêmes de nouveau assemblés pour former des réseaux partiels (TABC) de l'ordre supérieur suivant et
dans lequel on tient compte, pour la formation de l'information de routage dans le sens ascendant au regard de la hiérarchie du réseau de communication, de toutes les informations topologiques concernant des circuits de liaison à l'intérieur de la branche de la hiérarchie du réseau de communication partant du nodal de commutation (A.1..6, B.1..5, C.1..4) qui procède à la formation de l'information de routage,
**caractérisé par le fait**
**que** des boucles avantageuses de routage, qui traversent un ou plusieurs réseaux partiels (TB, TC, TAB, TABC), de n'importe quel niveau hiérarchique, et qui ont des nodaux de sortie et de réentrée différents (A.2, A.4; A.5, A.6) sont prises également en considération de telle sorte qu'on fait également appel, dans le sens descendant au regard de la hiérarchie du réseau de communication, à des circuits de liaison (pb3, pc2), partant du nodal de commutation (A.1, A.5) qui forme l'information de routage.

2. Procédé selon la revendication 1
**caractérisé par le fait**
**que** les nodaux de commutation (A.1..6, B.1..5, C.1..4) opèrent selon les principes du protocole privé des nodaux de réseau (protocole PNNI).

3. Procédé selon la revendication 1 ou 2
**caractérisé par le fait**
**que** la formation de l'information de routage dans le nodal de commutation d'origine (A.1) inclue les boucles de routage pour un message d'établissement d'une liaison.

4. Procédé selon la revendication 1 ou 2
**caractérisé par le fait**
**que** la formation de l'information de routage dans un nodal de commutation de transit (A.5) inclue les boucles de routage pour un message d'établissement d'une liaison.

5. Procédé selon l'une des revendications 1 à 4, dans lequel le nodal de commutation d'origine (A.1) et le nodal de commutation de destination (A.6) font partie du même réseau partiel (TA) et dans lequel les informations de routage sont formées en incluant une ou plusieurs boucles traversant d'autres réseaux partiels (TB, TC).

6. Procédé selon l'une des revendications 1 à 4, dans lequel le nodal de commutation d'origine (A.1) et le nodal de commutation de destination (A.6) ne font pas partie du même réseau partiel et dans lequel les informations de routage sont formées en incluant une ou plusieurs boucles traversant d'autres réseaux partiels de n'importe quel niveau hiérarchique au cours de la poursuite de l'établissement de la liaison.

7. Procédé selon l'une des revendications 1 à 6
**caractérisé par le fait**
**que**, pour la formation de l'information de routage comportant des boucles, on ne prend pas en considération des circuits de liaison (pc1, pc2) entre réseau partiels (TA, TC) à partir d'un niveau hiérarchique, qui peut être prédéterminé, et ceci en fixant un signe commun de correspondance pour plusieurs circuits de liaison.

8. Procédé selon l'une des revendications 2 à 7
**caractérisé par le fait**
**que** les informations de routage sont structurées, par le nodal de commutation ATM d'origine (VK1), en éléments d'information (DTL1..3), un élément d'information (DTL1..3) différent étant formé pour le premier réseau partiel (TA) et pour chaque ordre de réseaux partiels (TAB, TABC) inclus dans le routage.
